# EUROPEAN PATENT APPLICATION

(11) **EP 0 742 401 A2**
(43) Date of publication of application: **13.11.1996**
(21) Application number: 96303225.5
(22) Date of filing: 08.05.1996
(51) Int. Cl.: F16L 37/084

(54) **Manually releasable quick connector**

(30) Priority: 08.05.1995 US 437272
(71) Applicant: PROPRIETARY TECHNOLOGY, INC., Bloomfield Hills, Michigan 48302-7048 (US)
(72) Inventor: Bartholomew, Donald Dekle, Mt Clemens, Michigan 48045 (US)
(74) Representative: Price, Nigel John King

(57) **Abstract**

A swivelable quick connect assembly for use with tubular conduits is disclosed comprising a housing having an axial bore for receiving one end of the conduit, an elastomeric ring-like seal disposed in the bore for providing a fluid tight seal between confronting portions of the conduit and the housing, an annular bushing is disposed in the bore for positioning the seal and for guiding the one end of the conduit into nesting relationship with the bore, and a retainer detachably secured to the housing and cooperable with an annular projection on the conduit for securing the conduit in its operative position within the bore. The retainer is a one piece metal retainer element which includes at least two circumferentially spaced leg members which extend from an integral collar member at one end thereof. Each of the leg members has a deflectable leg portion which extends from the collar and ends in a first bend defined by an arcuate shape to provide a backstop for securing the retainer element in the connector assembly, and a retaining leg portion which extends from the deflectable leg portion and inclines generally toward the aperture in the collar.

## Description

This application is a continuation-in-part of USSN 08/009,009, filed January 26, 1993, to be issued on May 9, 1995, as U.S. Patent No. 5,413,387, which is a divisional of 07/506,449, filed April 6, 1990, now abandoned, which is a continuation of USSN 07/360,405, filed June 2, 1989, issued on June 26, 1990, as U.S. Patent No. 4,936,544, which is a divisional of USSN 07/251,038, filed September 26, 1988, issued on April 10, 1990, as U.S. Patent No. 4,915,136 which is a continuation of USSN 07/127,532, filed December 2, 1987, now abandoned, which is a continuation of USSN 06/748,307, filed June 24, 1985, now abandoned, which is a continuation of USSN 06/360,201, filed March 22, 1982, issued July 22, 1986 as U.S. Patent No. 4,601,497, which is a continuation-in-part of USSN 06/201,711, filed October 29, 1980, issued January 3, 1984 as U.S. Patent No. 4,423,892, which is incorporated here by reference.

The present invention relates to a connector assembly for providing a swivelable quick connection. More particularly, the present invention relates to a connector assembly including spring components that will retain their resiliency after repeated connections and disconnections while effectively distributing force between the male conduit and the female housing.

In the automotive industry, as well as for many other industries, the need always exists for low-cost, reliable, and easy to assemble components. This need is especially apparent with respect to providing a connection between fluid carrying conduits, such as fuel or refrigerant lines. In older threaded connectors, substantial assembly time could be accumulated in screwing a cap onto a fitting and tightening the cap down to the proper torque needed to provided for a fluid tight seal. Further, an inventory would have to be maintained to keep track of the number of caps and fittings, and any liners or other components that may be necessary. Also, retightening of the caps may be required to maintain the seal after the automobile or other system has been put in use.

In response to this need, efforts have been made to provide an improved connector assembly for providing a swivelable quick connection between fluid conveying conduits. One such connector is disclosed in United States Patent No. 4,681,351, issued to Bartholomew on July 21, 1987 for SWIVELABLE QUICK CONNECTOR ASSEMBLY and assigned to the common assignee of the present invention. Another connector along these lines is disclosed in United States Patent No. 5,257,833, issued to McNaughton et al. on November 2, 1993 for METAL RETAINER FOR QUICK CONNECT TUBING CONNECTOR. Both of these references are directed to the swivelable connection between a female housing and a male conduit which is accomplished by a resilient retainer element that retains the male conduit within the female housing.

While representing advances in the area of swivelable connector technology, neither of these references is directed to the problems of force distribution between the male and female components and repeated connection and disconnection of the components with respect to each other. Both of these references teach the use of a retainer element that comprises a leg portion positioned for engagement between a male conduit and a female housing. The leg portion includes a severely bent area that defines a retaining element for engagement with the female housing. The designs of the known art which incorporate this severely bent area are disadvantageous both in terms of wear and the distribution of force between the male conduit and the female housing. Failure to properly address these disadvantages resulted in the known designs which may lead to the premature wear of the retainer element which could result in an unsatisfactory coupling and the possibility of fluid loss if the integrity of a connection of a line carrying fluids is compromised.

Accordingly, none of the known methods of providing quick and swivelable connection between male and female fluid line components has delivered optimum results.

Accordingly, it is an object of the present invention to provide a connector that incorporates a resilient retainer element that distributes forces equally between the female housing and the male conduit.

It is a further object of the present invention to provide such a connector that is able to withstand repeated connection and disconnection of a male connector and a female housing without significant signs of fatigue and without consequent fracturing.

Another object of the present invention is to provide such a connector that is freely swivelable while retaining the above-stated characteristics.

It is a still a further object of the present invention to provide such a connector that is usable without the need for mechanical tools.

Another object of the present invention is to provide a pre-assembled connector housing and retainer element so that a snapping connection may be made to a tubular fluid-conveying conduit.

Another object of the present invention is to provide a connector assembly that may be employed to join dissimilar electrically conducting materials that would be otherwise subject to galvanic corrosion.

It is a further object of the present invention to provide a connector assembly which is adapted to provide for a bleed-down position when disconnecting a conduit from the housing of the connector assembly.

It is another object of the present invention to provide a pre-assembled connector conduit unit which requires only a one-step snapping connection to be joined to a connector housing.

It is also an object of the present invention to provide an improved retainer element which operates to both secure the conduit in the axial bore of the housing and position the sealing element within the axial bore of the housing.

It is a more specific object of the present invention to provide an improved retainer element formed with two or more leg members which operate to detachably secure the retainer element to the housing, the sealing means within the housing, the conduit in its operative position within the axial bore of the housing, and provide better resistance to off-axis forces on the conduit.

To achieve the foregoing objects, the present invention provides a swivelable connector assembly which generally comprises a tubular conduit, a housing, sealing means, and retainer means. The tubular conduit is adapted to convey fluid and is formed with an annular projection disposed a predetermined distance from the end of the conduit to be connected. The housing is formed with an axial bore for receiving the conduit at a first end and for providing a fluid path at a second end, and includes an inwardly extending annular lip (or suitable apertures) at the first end to detachably secure the retainer means to the housing. The sealing means is disposed within the axial bore of the housing for providing a fluid tight seal between confronting portions of the conduit and the housing. The retainer means is adapted to be disposed generally within the axial bore of the housing for cooperating with the annular projection of the conduit to secure the conduit in its operative position within the axial bore of the housing. The retainer means is a one piece metal retainer element which includes at least two circumferentially spaced leg members which extend from an integral collar member at one end thereof.

Each of the leg members has a deflectable leg portion which extends from the collar and ends in an arcuate first bend designed to provide a backstop for securing the retainer element in the connector assembly, and a retaining leg portion which extends from the deflectable leg portion and inclines generally toward the aperture in the collar. The end of the retaining leg portion is formed to engage the conduit such that the retaining leg portion will resist the disconnection of the conduit from the connector assembly.

The present invention will be more fully understood by reference to the following detailed description of the preferred embodiments of the present invention when read in conjunction with the accompanying drawings, in which like reference characters refer to like parts throughout the views, and in which:
Figure 1 is a side elevation view, partially in cross-section, of an embodiment of a connector assembly having a retainer element according to the present invention;
Figure 2 is a perspective view of the retainer element of Figure 1 shown in isolation;
Figure 3 is an end view of the retainer element of Figure 1 shown in isolation;
Figure 4 is a side view of the retainer element of Figure 1 shown in isolation;
Figure 5 is an expanded plan view of half of the blank for the retainer element of Figure 1;
Figure 6 is a partial cross-sectional perspective view of the retainer element of Figure 1;
Figure 7 is a side elevational view in partial cross section of a portion of the retainer element of Figure 1 in position between the male conduit and the female housing;
Figure 8 is a partial view of a prior art connector retaining element shown in relation with a female housing;
Figure 9 is a Gauss curve demonstrating an ideal force transfer versus characteristic undesirable prior art force transfers; and
Figure 10 is a partial view of an additional prior art connector retaining element shown in relation with a female housing.

The drawings disclose the preferred embodiment of the present invention. While the configurations according to the illustrated embodiment are preferred, it is envisioned that alternate configurations of the present invention may be adopted without deviating from the invention as portrayed. The preferred embodiment is discussed hereafter.

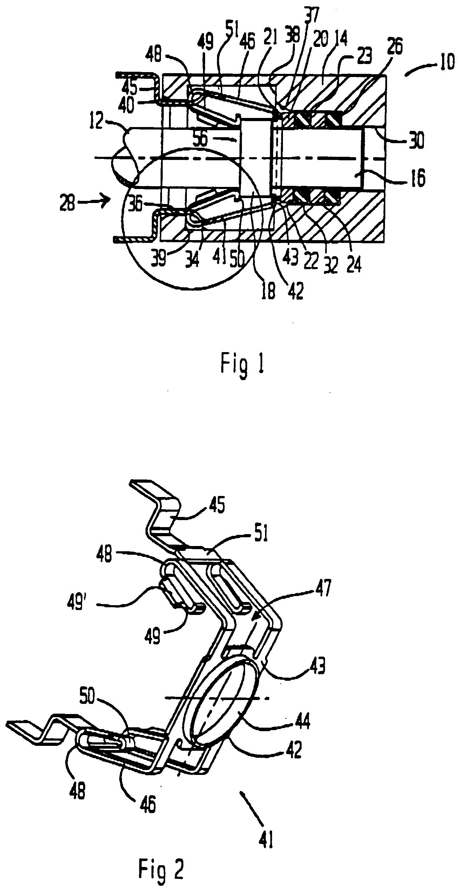

Referring to Figure 1, a side elevation view, partially in cross section of an embodiment of a connector assembly of the present invention is shown and is generally illustrated as 10. The connector assembly 10 includes a male conduit 12 and a female housing 14. The male conduit 12 includes an end 16 having a finished surface as appropriate to form a fluid-tight seal with fluid seals as discussed below. Adjacent the end 16 is a conduit flange 18 that operates to secure the conduit 12 within the female housing 14.

A tubular flanged collar 20 having a first side 21 and a second side 22 is fitted to the conduit 12. Adjacent the collar 20 is a first seal 23, an annular bushing 24, and a second seal 26. The first and second seals 23 and 26 respectively are preferably O-ring type seals composed of an elastomeric, fluid-seal providing material. The annular bushing 24 functions to both position of the seals 23 and 26 and to guide the end 16 into nesting relationship within the female member 14. Those skilled in the art will understand that arrangement of the seals and the bushing as set forth is not intended to be limiting but may well be modified to meet the particular needs of each connector.

The female housing 14 includes a throughbore 28 into which the male conduit 12 is selectively fitted. The throughbore 28 is subdivided into distinct regions including a first bore 30 which receives the most distal portion of the end 16 of the conduit 12, a second bore 32 into which the seals 23 and 26 and the bushing 24 as well as a portion of the collar 20 are fitted, a third bore 34, and a fourth bore 36. Adjacent the second bore 32 is a chamfered lead-in portion 37. The lead-in portion 37 is formed to provide an area that is gradually reduced in diameter toward the second bore 32. As such, the overall diameters of the seals 23 and 26 are reduced by the lead-in portion 37 upon insertion of the conduit 12 into the housing 14.

Between the lead-in portion 37 and the third bore 34 is formed a radial wall 38 against which acts as an inward stop for the retainer 41 of Figure 2. This relationship prevents excessive insertion of the male conduit 12 into the female housing 14.

A radial wall 39 is formed between the third bore 34 and the fourth bore 36. The radial wall 39 functions in engagement of the male conduit 12 in the female housing 14, as will be described below. A lead-in chamfer 40 is formed at the outermost end of the female housing 14.

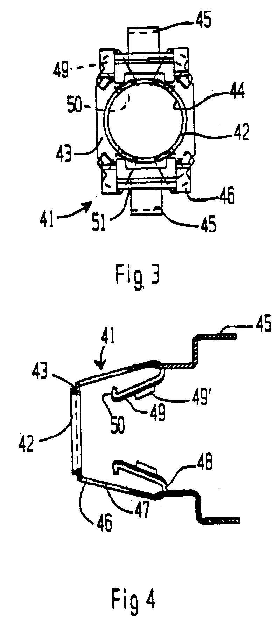

Figure 4 illustrates a side view of the operative retaining element of the present invention. With reference then to both Figures 1 and 4, a resilient retainer element 41 is shown in position between the male conduit 12 and the female housing 14 in Figure 1 and in isolation in Figure 4. In the embodiment illustrated in these figures, the retainer element 41 is preferably a one-piece construction that is manufactured from a metallic material. The retainer element 41 includes a collar 42, a body element 43, at least one or more deflectable fingers 45, and at least one or more legs 46.

The collar 42 is positioned adjacent the wall 21 of the collar 20 and has an aperture 44 (shown in Figures 2, 3, 5, and 6) for providing passage of the conduit 12 through the retainer element 41. Each of the legs 46 projects from the body element 43 and bends at an arc at area 48 forming a backstop for locking engagement with the radial wall 39. The arcuate area 48, in turn, connects a retaining portion 49 which bends, partially doubling back on itself, forming a flange 50. When the male conduit 12 is locked into position in the female housing 14, the flange 50 resiliently engages a surface 56 formed on the conduit flange 18 of the male conduit.

As now may be clearly understood, The lead-in chamfer 40 serves to lead in the retainer 41 whereby the retainer 41 is structured such that upon insertion of the male conduit 12 into the female housing 14, the legs 46 are reduced by the chamfer 40 as the retainer 41 is squeezed toward the control axis of the conduit 12. A cut out area 47 is shown between adjacent legs 46 to define the legs 46 as springs that must bend in response to the entry of the male conduit 12 (and male conduit flange 18 into female 14) sufficiently to reduce the bending force on area 48 and prevent the breaking away of retaining portion 49 from the legs 46.

As noted, the backstop 48 abuts against the radial wall 39 for securing the retainer element 41 in the housing 14. Simultaneously, and in the engaged position, the flange 50 biases on the conduit flange 18 securing the conduit 12 in the retainer element 41.

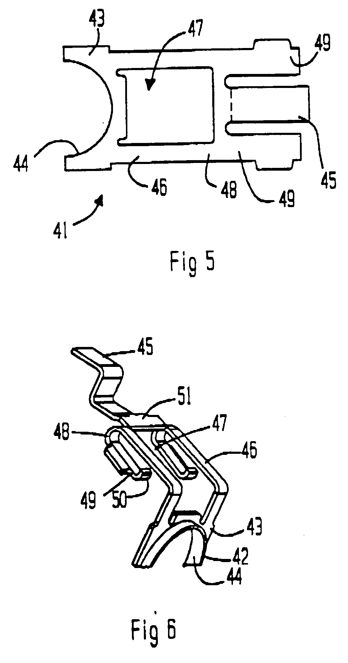

Referring to Figures 2 and 6, perspective views of the retainer element 41 are illustrated. In Figure 2 the retainer element 41 is shown in its entirety, while in Figure 6 it is only partially shown. As illustrated, a member 51 interconnects a pair of substantially parallel legs 46. The fingers 45 project from the legs 46. The fingers 45 provide a means for grasping and removing the retainer element 41 from the female housing 14. The fingers 45 are generally bent in accordance with conventional sheet metal practice. While a single finger 45 is illustrated for each substantially parallel pair of legs 46, it is possible that each leg 46 would have its own finger.

Figure 3 is an end view of the retainer element 41 and illustrates the position of the collar 42 with respect to the body 43, one of the legs 46, and the fingers 45. This view also illustrates the inwardly-facing position of the retaining portion 49 and the position of the flanges 50 with respect to the aperture 44.

Figure 5 is an expanded plan view showing approximately half of the retainer element 51 prior to its being bent into the shape illustrated in the other figures. As noted, the retainer element 41 is preferably formed from a metallic material, and the form illustrated in Figure 5 shows how the element 41 appears after stamping but before being selectively bent to assume the functional retainer shape shown in the other figures.

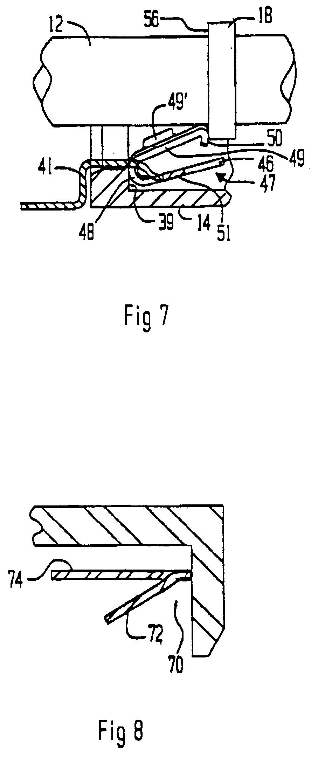

Figure 7 is a close-up, detailed side elevational view in partial cross section of a portion of the retainer element 41 in its locking and engaged position between the male conduit 12 and the female housing 14. This detailed view more clearly discloses the advantages of the present design over known retainers.

Specifically, the present design provides at least two significant advantages over the prior art. One advantage represents an improvement in wear characteristics, while the other advantage represents an improvement in locking characteristics.

With respect to the first advantage, the sharply bent connection between the outer leg (part of the leg 46 in the illustrated invention) and the inner leg (retaining portion 49 in the illustrated invention). During formation, the sharp bending of the metal 48 connecting the inner and outer legs stresses the material such that the integrity of the metal defining the bend itself is significantly compromised. This is particularly a problem on repeated insertion and removal of the male conduit and the female housing, where such repeated use often results in fracturing of the metal at the bend 48, and subsequent failure of the connection.

The illustrated design of the present invention overcomes this difficulty by minimally stressing the metal at the bend that defines the arcuate area 48. Because the design represents a gently curving bend 48, and because of the spring arms 46, the stress is reduced on the narrow area of the metal form, and the stress is equally distributed over a wide area, thus minimizing the likelihood of fracture after repeated connection and disconnection.

With respect to the second advantage, the force on the expanded diameter 18 of the male conduit 12 is also better distributed by the ends 50 of retainer legs 49. Shown in Figure 4 are stiffeners 49' for the retainer arms 49. The stiffeners 49' are shown only part way on the straight section of arms 49, but they may be over the full extent of arms 49 between where the bending takes place for areas 50 and 48.

Figure 8 illustrates a bend (generally illustrated as 70) between an inner leg 72 and an outer leg 74 that is typical of the prior art. The outer leg 74 is stiff and the inner leg 72 combines the required bending and the resistance to pull-out of the male from the female. Constructions such as this cannot have the resistance to pull apart that the stiffer construction that elements 49 and 49' confer to the retainer 41.

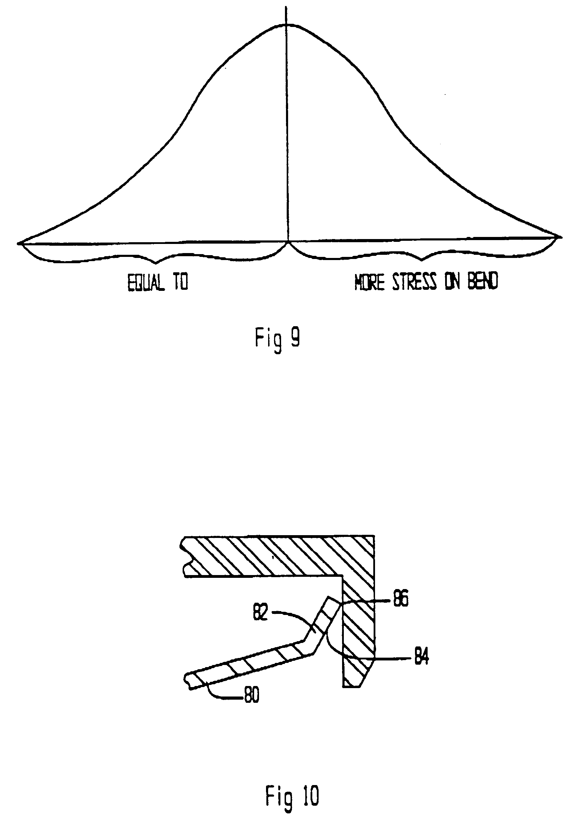

Figure 9 shows a Gauss curve that represents the fit and tolerances to be expected when a retainer is constructed as shown in Figure 10. In Figure 10, the retainer arm 80 has a bend 82 that is between arm 80 and pad 84. Figure 10 is drawn in a position where the tip 86 of the pad 84 is passing the forces that would separate the male conduit from the female housing. This corresponds to the left half of the Gauss curve of Figure 9. There is a lever arm, the distance down tab 84 from tip 86 to bend 82, that increases the bending force on area 82 as a result of the force that is being transmitted to the female housing by the tip of the pad 86. This means that in Figure 9, those tolerance situations on the left side of the Gauss curve are a worse force on bend 82, and tolerances that cause the force transmitted from arm 80 to be transmitted to the female housing by the bend 82 are as good as the embodiment of retainer 41 that is shown, all things being equal (and they can be equal). Accordingly, Figure 10 type construction with the pads can only be as good only 50 percent of the time.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification and following claims.

## Claims

1. A retainer element for securing a male conduit in a female housing having a radial wall, the retainer element comprising:
a body, said body having at least a collar, said collar having two deflectable legs projecting therefrom, each of said legs including an outer leg portion and an inner leg portion, said outer leg portion being attached to said body, said inner and outer leg portions being connected by an arcuate area, said arcuate area defining a backstop for engagement with the radial wall of the female housing, and said outer leg portion being a spring that reduces the bending forces that appear on the arcuate area.

2. The retainer element of claim 1, wherein said collar includes an aperture therethrough for passage of the male conduit.

3. The retainer element of claim 1 or 2, wherein the male conduit further includes a flange and said inner leg portion further includes a retaining surface for engagement with the flange of the male conduit.

4. The retainer element of claim 1, 2 or 3, wherein the female housing includes an outer wall and each of said legs further includes a finger element projecting therefrom and extending from the outer wall of the female housing when the male conduit is connected to the female housing.

5. The retainer element of claim 4, wherein said finger element is stiffened.

6. A retainer element for securing a male conduit having a flange in a female housing having a radial wall, the retainer element comprising:
a body, said body having a collar, said collar having an aperture therethrough for passage of the male conduit, said collar being positioned adjacent the flange of the male conduit, said collar having two sets of deflectable legs projecting therefrom, each set defining a pair of substantially parallel legs, each of said legs including an outer leg portion and an inner leg portion, said outer leg portion being attached to said body, said inner and outer leg portions being connected by an arcuate area, said arcuate area defining a backstop for engagement with the radial wall of the female housing, said outer leg portion constituting a spring for the purpose of reducing the bending force applied to said arcuate area.

7. The retainer element of claim 6, wherein said inner leg portion further includes a retaining surface for engagement with a flange of the male conduit.

8. The retainer element of claim 6 or 7, wherein the female housing includes an outer wall and each pair of said legs includes a finger connected thereto and extending from the outer wall of the female housing when the male conduit is connected to the female housing.

9. The retainer element of claim 8, wherein said fingers are stiffened.

10. The retainer element of any one of the preceding claims, wherein the female housing further includes a first bore and the male conduit is partially fittable within the first bore, said collar being positioned between said flange of the male conduit and the first bore of the female housing.

11. The retainer element of claim 10, wherein the male conduit further includes a retaining collar positioned between the flange of the male conduit and the first bore of the female housing, said collar being positioned between the retaining collar and the flange of the male conduit.

12. The retainer element of any one of the preceding claims, wherein said body is composed of a metal.

13. A one piece metal retainer element for securing a conduit in a connector assembly, comprising:
a collar having an aperture for permitting passage of said conduit through said collar; and
at least two spaced apart legs projecting from one side of said collar, each of said legs being formed to provide a deflectable leg portion which extends from said collar and ends in an arcuate bend to provide a backstop for securing said retainer element in said connector assembly, and a retaining leg portion which extends from said deflectable leg portion at said arcuate bend and inclines generally toward the aperture in said collar, the end of said retaining leg portion being formed to engage said conduit such that said retaining leg portion will resist the disconnection of said conduit from said connector assembly when said conduit is disposed in its operative position within said connector assembly, said retaining leg portion including flange means for increasing the resistive force of said retaining leg portion, and said deflectable leg being a spring for the purpose of reducing the bending force that is applied to the arcuate bend by the retaining leg portion.

14. The retainer element according to Claim 13, wherein said flange means includes a pair of inclined flanges disposed along opposite sides of said retaining leg portion, each of said flanges including finger means for grasping said retainer element and enabling said retainer element to be removed from said connector assembly.

15. The retainer element according to claim 13 or 14, wherein said retaining leg portion extends from said arcuate bend to form an arm which bends back upon itself to enable said retainer element to be removed from said connector housing.

16. The retainer element according to claim 15, wherein said retaining leg portion includes a second bend at the end formed to engage said conduit, said second bend generally having a V shape.

17. The retainer element of any one of claims 13 to 16, wherein said retaining leg portion has been stiffened.
